# FASCICULE DE BREVET EUROPEEN

(11) **EP 2 230 436 B1**
(45) Date de publication et mention de la délivrance du brevet: **22.01.2014**
(21) Numéro de dépôt: 10154620.8
(22) Date de dépôt: 25.02.2010
(51) Int. Cl.: F17D 5/02, F16L 59/10, F16L 59/135

(54) **Élément de protection d'isolation thermique pour tuyauterie**
Wärmedämmelement für Rohrleitungen
Protection element for thermal insulation of pipes

(30) Priorité: 17.03.2009 FR 0951675
(43) Date de publication de la demande: 22.09.2010
(73) Titulaire: DAHER AEROSPACE, 41400 Saint-Julien-de-Chedon (FR)
(72) Inventeur: Bourlart, Rémi, 59570 Bellignies (FR)
(74) Mandataire: Hamann, Jean-Christophe

(56) Documents cités:
- EP-A1- 0 240 620
- EP-A1- 1 602 910
- EP-A2- 2 053 294
- WO-A1-2007/004870
- WO-A1-2008/019790
- WO-A2-2010/018337
- DE-A1- 10 302 001

## Description

L'invention concerne un élément de protection pour l'isolation thermique de tuyauteries, l'élément étant également destiné à servir de dispositif de support à des équipements techniques devant cheminer le long des tuyauteries. En particulier, ces équipements techniques suivent idéalement les tuyauteries afin de détecter d'éventuelles fuites à travers elles.

L'invention est plus particulièrement décrite quant à l'utilisation de tels éléments de protection dans le domaine aéronautique pour de la tuyauterie véhiculant notamment de l'air à haute température et/ou à haute pression. Elle s'applique néanmoins à tous domaines intégrant des éléments ou coques de protection pour tuyauteries.

Dans un avion, des dizaines de mètres de tuyauteries sont agencées pour prélever depuis des zones établies, par exemple au niveau des réacteurs, de l'air à haute température (entre 260 et 540°C) ou sous pression (de 5 à 15 bars), et distribuer cet air à des systèmes de traitement permettant notamment de fournir de l'air conditionné et/ou pressurisé à des espaces spécifiques tels qu'en cabine, en zone passagers, ou d'alimenter en air chaud les ailes de l'avion afin d'assurer le dégivrage de leur bord d'attaque.

Ces tuyauteries cheminent à travers des zones de l'avion non pressurisées et soumises aux conditions de transport, en subissant par conséquent les conditions en température et pression de l'environnement ambiant, les températures pouvant en particulier atteindre -50°C et les pressions pouvant descendre à 0,2 bar. Il est donc nécessaire pour acheminer l'air à haute température et sous pression sans pertes thermiques trop importantes d'assurer une isolation thermique des tuyauteries.

En outre, il est impératif et même normalisé que ces tuyauteries présentent un niveau d'isolation thermique telle que la température de surface des tuyaux n'excède pas 204°C pour éviter tout risque d'auto-inflammation de fluides pouvant se trouver de manière inopportune au contact de l'extérieur des tuyaux, ces tuyaux traversant des zones acheminant des fluides tels que le carburant d'alimentation de l'avion.

Les tuyauteries sont métalliques et leur isolation thermique est assurée de manière connue par un recouvrement formé d'un matériau isolant thermiquement, tel que de la mousse ou de la laine minérale, et d'éléments de protection rigides agencés par-dessus le matériau isolant. Les éléments de protection ou au moins leur peau externe sont généralement en matériau métallique, ou en matière composite, ou en silicone ou même en titane.

Les éléments de protection sont formés de deux demi-coques qui sont rapportées à la manière d'un sandwich contre un tuyau entouré de matériau isolant. Les demi-coques sont solidarisées au tuyau par soudage au niveau de leurs extrémités libres qui présentent des profilés métalliques de liaison de section en Z, dont un côté est connecté à la peau externe d'une demi-coque par collage ou soudage, tandis que l'autre côté est destiné à être soudé au tuyau.

Les tuyauteries sont formées de tronçons aboutés et soudés entre eux, et connectés pour certains à des systèmes de fermeture et d'ouverture et/ou de régulation, tels que des vannes ou des compensateurs angulaires. Le risque de fuite au niveau des tuyaux et de leurs connexions existe, lié par exemple à une propagation de fissure dans la tuyauterie, à une mauvaise soudure entre tronçons, ou à une perte d'étanchéité au niveau des systèmes de vanne.

Or, il est nécessaire de détecter toute fuite, puisque ces tuyaux cheminent, comme déjà dit, dans des zones où circulent par ailleurs des fluides qui, en contact avec de l'air à haute température, peuvent s'enflammer.

En outre, une fuite peut mener à la perte de fonction du système final à alimenter (système de dégivrage, climatisation, etc...).

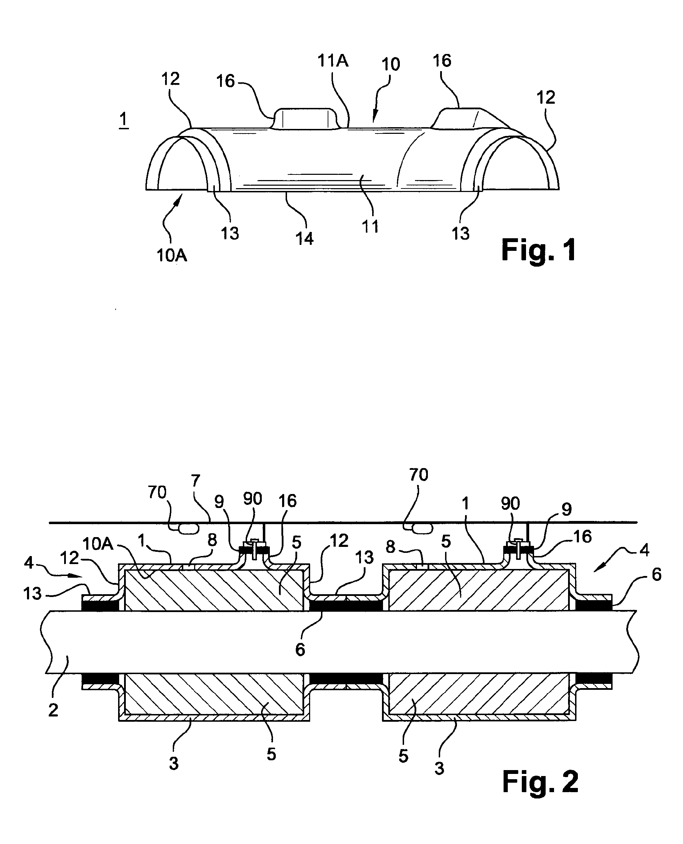

Afin de détecter d'éventuelles fuites au travers de ces tuyauteries, les demi-coques d'isolation thermique sont pourvues d'orifices ou trous d'aération depuis lesquels peut s'échapper l'air chaud en cas de fuite, tandis qu'un dispositif de détection, tel qu'une ligne sensorielle, est installé le long des tuyauteries en étant muni de capteurs mis en regard des trous d'aération et aptes à détecter l'air chaud s'échappant. Le document EP 0 240 620 A1 dévoile le préambule de la revendication 1, voir en particulier les élments de protection références 18, 28 figure 2 qui coopérent avec la ligne sensorielle 26, la fente 25 et les clips 27. Par ailleurs, une ligne sensorielle, telle que décrite dans le document EP1602910, est installée à l'aide de supports à la manière de colliers rapportés autour des coques d'isolation thermique des tuyaux, et supportant à distance du tuyau, un câble maintenant des capteurs espacés régulièrement et associés en regard des trous d'aération.

Ces dispositifs de détection ne peuvent être mis en place qu'après l'installation des tuyauteries. En raison de l'enchevêtrement des tuyaux au sein d'un espace réduit, le travail de mise en place et de serrage d'une multitude de colliers n'est pas pratique et reste fastidieux, d'autant qu'il est ensuite nécessaire de positionner correctement, le câble portant les capteurs ainsi que les capteurs au niveau des trous d'aération. Par ailleurs, un collier mal serré peut engendrer le déplacement du câble et par conséquent le décalage en position d'un ou de plusieurs capteurs, ce qui annihile une détection efficace, voire même effective.

L'invention a donc pour but de fournir un élément de protection d'isolation thermique pour tuyauterie, en vue de former une coque d'isolation thermique, cet élément de protection assurant une fonction supplémentaire de support d'équipement technique et conduisant à une mise en place aisée, rapide de cet équipement, tout en garantissant son positionnement idoine, cette mise en place restant en outre fiable dans le temps.

Selon l'invention, l'élément de protection d'isolation thermique est conforme à la revendication 1.

Cette plate forme est ainsi intégrée dans l'épaisseur de la paroi. Elle ne constitue pas un élément indépendant, mais fait partie intégrante du corps en étant un membre constitutif et indissociable dudit corps. Elle forme une surface sensiblement plane. Elle constitue des moyens de positionnement et/ou de support d'un dispositif externe à l'élément de protection et distinct d'un autre élément de protection qui serait rapporté de manière opposée audit élément et en regard de la cavité pour former une coque entière. Cette plate-forme permet ainsi de fournir un support pour toute fixation ultérieure.

En outre, elle impose la localisation de l'équipement technique à associer à l'enveloppe de protection du tuyau. Il n'est plus nécessaire de devoir calculer au préalable et positionner l'endroit au niveau duquel doivent être prévus le positionnement et/ou la fixation de l'équipement technique.

Cette plate-forme permet également de rigidifier davantage la demi-coque, évitant une déformation au cours du temps de celle-ci.
Enfin, la plate-forme assure une surélévation par rapport au reste du corps et donc du tuyau, imposant à l'équipement technique à associer une certaine distance de séparation entre celui-ci et le tuyau. En particulier, pour une application dans l'aéronautique avec des lignes sensorielles, celles-ci sont automatiquement mises à la distance voulue de la coque et le sont avec une régularité certaine.

Cette surélévation ou ce bossage par rapport à la face externe du corps en regard de l'environnement extérieur est agencé au niveau de la face générale de la paroi, afin de faciliter son accessibilité en tant que moyen de positionnement et d'attache.
Cette plate forme ne constitue pas un moyen de liaison ou d'assemblage de deux corps creux entre eux pour fournir une coque mais a pour fonction d'assurer le positionnement idoine et la fixation d'un élément extérieur rapporté.

Selon une caractéristique, la plate-forme comporte avantageusement au moins un orifice constituant un moyen de fixation. Celui-ci est destiné à recevoir par exemple une vis ou un rivet pour la fixation de l'élément technique.

La plate-forme est conçue pour être suffisamment rigide. Aussi la paroi peut-elle être renforcée de par la nature même du ou des matériaux constitutifs de ladite plate-forme. En variante ou en combinaison, la plate-forme peut présenter une forme dont les lignes sont dessinées pour un renfort de la structure. Selon l'invention, la plate-forme comporte au moins un insert de type métallique noyé dans la paroi 11 du corps de l'élément.

Selon une autre caractéristique, la paroi du corps est composée avantageusement de matériau(x) isolant(s) thermiquement apte(s) à être moulé(s), tels qu'à base de matière plastique, du type résine époxy, et/ou de fibres d'isolation thermique, du type fibres de verre.

Outre sa propriété d'isolation thermique, le matériau composite de l'élément de protection de l'invention présente l'avantage de gagner en masse de structure par rapport à une enveloppe métallique, ce qui n'est pas dénué d'intérêt dans un avion, pour lequel on cherche constamment à alléger son poids, notamment pour une question d'économie en carburant et de protection de l'environnement.

Avantageusement, la paroi du corps de l'élément de protection présente au moins un trou d'échappement pouvant être recouvert d'une pastille de protection amovible ou non, le trou d'échappement étant de préférence disposé à proximité de la plate-forme.

La pastille amovible permet d'utiliser les éléments de protection avec ou sans trou. Si un ou des trous d'échappement sont utiles, notamment quant à l'application de l'invention dans l'aéronautique pour détecter toute fuite de fluide pouvant s'échapper des tuyaux, il suffit de percer ou détacher la pastille de protection avant de rapporter l'élément de protection contre le tuyau.

L'élément de protection est en effet destiné avantageusement à recouvrir par sa concavité ouverte un tuyau.

Il est ainsi destiné à être associé en vis-à-vis, à une coiffe complémentaire pour former une coque de protection isolante enfermant ledit tuyau.

L'élément de protection de l'invention est avantageusement utilisé pour la fixation d'éléments techniques destinés à suivre le chemin de la tuyauterie contre laquelle ledit élément est rapporté.

En particulier, il supporte avantageusement au moyen de la ou les plates-formes, une ligne sensorielle munie d'au moins un capteur agencé en regard d'un trou d'échappement de manière à détecter toute fuite s'échappant de la tuyauterie. L'agencement du trou à proximité de la plate-forme permet avantageusement de positionner un capteur à l'endroit idoine, à savoir en regard d'un trou, la ligne sensorielle portant les capteurs étant déjà avantageusement bien positionnée par sa fixation aux plates-formes.

Enfin, l'élément de protection est avantageusement rapporté contre de la tuyauterie agencée plus particulièrement dans un bâtiment, ou dans un engin de locomotion du type aéronautique, ferroviaire, nautique, routier.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue en perspective d'un élément de protection selon l'invention;
- La figure 2 est une vue en coupe longitudinale d'un tuyau associé à des éléments de protection selon l'invention et à des éléments complémentaire pour former des coques de protection du tuyau;
- La figure 3 représente une vue en perspective et de dessus de l'élément de protection de la figure 1.
- La figure 4 représente une vue en perspective et en coupe de l'élément de protection au niveau d'une plate-forme conformément à l'invention.

La figure 1 illustre un élément de protection 1 selon l'invention en vue de l'isolation thermique de tuyaux.

Cet élément de protection, à concavité ouverte 10A, forme une demi-coque. Son matériau constitutif est un matériau apte à être moulé. Il s'agit de préférence d'un matériau composite à base de matière plastique du type résine époxy, et/ou de fibres à propriété d'isolation thermique, telles que des fibres de verre.

Une telle demi-coque est destinée à revêtir des tuyaux en étant assemblée en vis-à-vis avec une demi-coque aux propriétés mécaniques et isolantes similaires et de forme générale équivalente, pour former une coque de protection.

La figure 2 représente une vue en coupe d'un tuyau 2 pris en sandwich entre la demi-coque 1 de l'invention et une demi-coque complémentaire 3 pour constituer une coque de protection 4 autour du tuyau. Une telle coque est par exemple utilisée pour la protection thermique de tuyaux logés dans des avions et dans lesquels circulent de l'air à haute température (jusqu'à 540°C). Ces tuyaux sont enrobés par un isolant thermique 5 tel que de la mousse ou de la laine d'isolation, et recouverts par la coque de protection 4 qui forme une peau externe dont la température n'excède pas 204°C conformément à la norme dans le domaine aéronautique.

L'élément de protection ou demi-coque 1 peut être droit ou coudé pour s'adapter à la forme du tuyau à recouvrir.

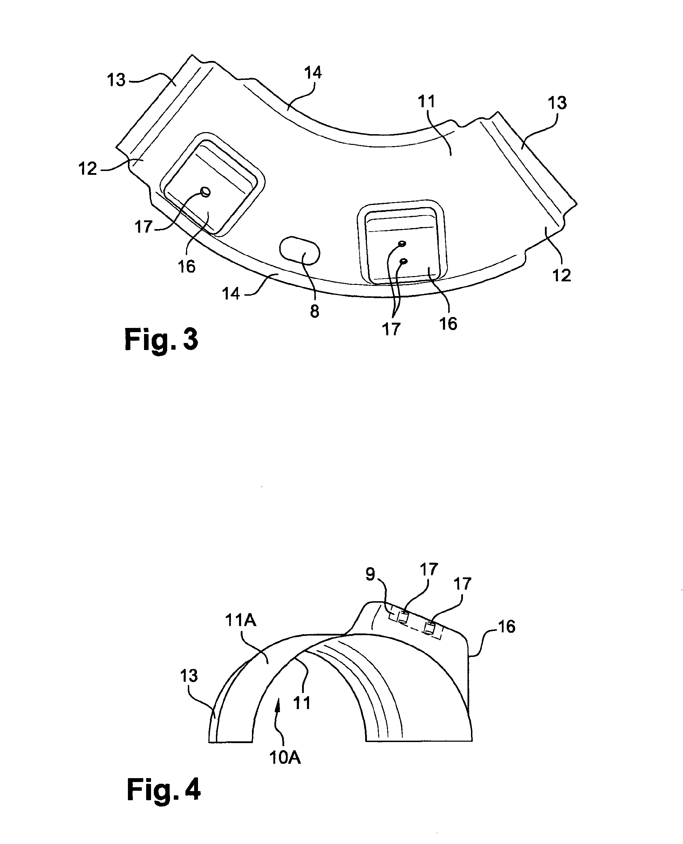

Tel qu'illustré sur les figures 1 et 3, l'élément de protection 1 présente un corps 10 qui comporte une paroi 11 de forme sensiblement concave ou semi-cylindrique pour coopérer avec la forme sensiblement cylindrique des tuyaux, et des extrémités libres 12.

La paroi 11 présente avantageusement au niveau de chaque extrémité 12 du corps un épaulement 13 destiné à la solidarisation de l'élément de protection au tuyau.

La paroi 11 présente des bords latéraux libres 14 destinés à constituer des bords d'appui pour les bords opposés de la demi-coque complémentaire 3 à assembler.

De manière optionnelle et liée à la destination de la demi-coque, celle-ci comporte des trous 8 qui servent comme il sera vu par la suite à l'échappement du fluide circulant dans les tuyaux si ceux-ci présentent une fuite.

Comme visible sur la figure 2, l'élément de protection 1 est assemblé au tuyau en rapportant la concavité 10A du corps contre l'isolant 5, et en plaquant les extrémités 12 contre le tuyau 2. La fixation est réalisée par des moyens de collage 6 adapté à la liaison du matériau métallique du tuyau, au matériau composite des extrémités 12, et plus particulièrement de l'épaulement 13.

A noter que la fixation des extrémités 12 de l'élément de protection est assurée avantageusement, directement au niveau du corps 10 par la conformation adaptée des épaulements 13. Toutefois, le corps 10 pourrait présenter comme dans l'art antérieur des extrémités 12 sans épaulement ; un profilé métallique en Z serait alors rapporté par collage contre l'intérieur de la paroi 11 au niveau de chaque extrémité 12, et la fixation de l'élément de protection serait effectuée par soudage des profilés métalliques contre le tuyau.

La demi-coque complémentaire 3 est rapportée et fixée au tuyau de la même façon que l'élément de protection 1. Et son assemblage avec l'élément de protection 1, est obtenu par le soudage de ses bords latéraux avec les bords d'appui 14 dudit élément de protection.

Le tuyau 2 comporte ainsi tel que visible sur la figure 2 une pluralité de coques 4 aboutées les unes aux autres pour suivre la linéarité ou les courbures du tuyau. Chaque élément de protection 1 d'une coque de protection est associé au même côté du tuyau.

Selon l'invention, l'élément de protection 1 sert de moyen de support et de positionnement à un équipement technique 7 à associer au tuyau (figure 2).

L'équipement technique 7 est par exemple une ligne sensorielle de détection de fuite de l'air ou autre gaz pouvant s'échapper du tuyau. Cette ligne, peut en elle même être un capteur ou être remplacée par une série de capteurs 70 répartis de manière discrète, doit impérativement suivre le tuyau, en étant positionnée à une distance spécifique du tuyau et telle que les capteurs sont agencés à proximité immédiate d'au moins un trou d'échappement 8 prévu dans l'élément de protection. En cas de fuite, l'air s'échappe par les trous 8 et est détecté par les capteurs.

Selon l'invention, l'élément de protection assure de par sa configuration le support direct de la ligne sensorielle. La paroi 11 de l'élément de protection 1 comporte au moins une forme en saillie ou plate-forme rigide 16 qui constitue un moyen de positionnement et/ou de support de l'équipement technique 7 à associer audit élément.

Cette plate-forme constitue un bossage par rapport à la face externe 11 A de la paroi, face opposée à la concavité ouverte 10A. Elle est formée par moulage lors de la fabrication du corps de l'élément.

La plate-forme 16 est suffisamment rigide et intègre dans la paroi du corps tel que visible sur les figures 2 et 4, au moins un insert métallique 9, pour conférer une zone d'appui et de fixation. L'insert est rendu solidaire par son insertion dans la matière composite du corps 10 lors de la fabrication par moulage de l'élément de protection.

La plate-forme 16 présente avantageusement au moins un orifice 17 visible sur les figures 3 et 4, et destiné à coopérer avec une pièce de fixation 90 (figure 2) du type vis ou rivet pour la fixation de l'élément technique 7. Selon le type de fixation utilisée pour l'équipement à associer, l'orifice peut être lisse ou fileté.

Ainsi, est par exemple fixée et de manière illustrée en figure 2, la ligne sensorielle 7 qui est un câble associé à distance du reste du corps 10 de l'élément de protection, et à distance donc du tuyau. Cette ligne peut être remplacée par une série de capteurs 70 répartis de manière discrète. Les capteurs sont alors positionnés de manière adéquate directement en regard des trous d'échappement 8.

L'élément de protection de l'invention permet ainsi d'assurer, outre sa fonction d'isolant thermique, une fonction de support pour le positionnement et/ou la fixation d'équipements, grâce à la présence d'une plate-forme rigidifiée formant une surface adaptée à la fixation.

## Revendications

1. Elément de protection (1) d'isolation thermique (5) pour tuyauterie, comportant un corps creux (10) à concavité ouverte (10A) et présentant une paroi (11), **caractérisé en ce qu'**est intégrée dans l'épaisseur de la paroi (11) au moins une plate-forme rigide (16) constituant un bossage par rapport à la face externe (11 A) de la paroi et constituant un moyen de positionnement et/ou de support destiné à recevoir la fixation d'un équipement technique à associer audit élément de protection, et **en ce que** la plate-forme (16) comporte au moins un insert (9) noyé dans la paroi (11) du corps de l'élément.

2. Elément de protection selon la revendication 1, **caractérisé en ce que** la plate-forme (16) comporte au moins un orifice (17) constituant un moyen de fixation.

3. Elément de protection selon l'une quelconque des revendications précédentes, **caractérisé en ce que** la paroi (11) du corps est composée d'un ou de plusieurs matériaux isolants thermiquement aptes à être moulés, tels qu'à base de matière plastique, du type résine époxy, et/ou de fibres d'isolation thermique, du type fibres de verre.

4. Elément de protection selon l'une quelconque des revendications précédentes, **caractérisé en ce que** la paroi (11) du corps présente au moins un trou d'échappement (8) pouvant être recouvert d'une pastille de protection amovible ou non, le trou d'échappement étant de préférence disposé à proximité de la plate-forme (16).

5. Élément de protection selon l'une quelconque des revendications précédentes, **caractérisé en ce qu'**il est destiné à recouvrir par sa concavité ouverte (10A) un tuyau (2).

6. Elément de protection selon la revendication 5, **caractérisé en ce qu'**il est destiné à être associé en vis-à-vis, à une coiffe complémentaire (3) pour former une coque de protection isolante (4) enfermant ledit tuyau (2).

7. Elément de protection selon l'une quelconque des revendications précédentes, **caractérisé en ce qu'**il est utilisé pour la fixation d'éléments techniques (7) destinés à suivre le chemin de la tuyauterie contre laquelle ledit élément est rapporté.

8. Elément de protection selon la revendication 4, **caractérisé en ce qu'**il supporte au moyen de la ou les plates-formes (16), une ligne sensorielle (7) muni d'au moins un capteur (70) agencé en regard d'un trou d'échappement (8).

9. Elément de protection selon l'une quelconque des revendications précédentes, **caractérisé en ce qu'**il est rapporté contre la tuyauterie agencée dans un bâtiment, ou dans un engin de locomotion du type aéronautique, ferroviaire, nautique, routier.

## Patentansprüche

1. Wärmedämmelement (1) (5) für Rohrleitungen, bestehend aus einem Hohlkörper (10) mit einer offenen Konkavität (10A) und eine Wand (11) aufweisend, **dadurch gekennzeichnet, dass** in die Wandstärke (11) mindestens eine starre Plattform (16) eingebettet ist, die in Bezug zur Außenseite (11A) der Wand einen hervorstehenden Buckel sowie ein Mittel zum Positionieren und/oder Abstützen bildet, das für die Aufnahme der Befestigung einer dem Dämmelement zuzuordnenden technischen Ausstattung vorgesehen ist, und dadurch, dass die Plattform (16) mindestens eine in die Wand (11) des Körpers des Dämmelements eingelassene Einlage (9) umfasst.

2. Dämmelement nach Anspruch 1, **dadurch gekennzeichnet, dass** die Plattform (16) mindestens eine Öffnung (17) umfasst, die ein Befestigungsmittel bildet.

3. Dämmelement nach einem der vorausgehenden Ansprüche, **dadurch gekennzeichnet, dass** die Wand (11) des Körpers aus einem oder mehreren Wärmedämmmaterial(ien) besteht, das/die gießfähig sind, wie z. B. Kunststoffe vom Typ Epoxidharz, und/oder Wärmedämmfasern vom Typ Glasfasern.

4. Dämmelement nach einem der vorausgehenden Ansprüche, **dadurch gekennzeichnet, dass** die Wand (11) des Körpers mindestens eine Entlüftungsöffnung (8) aufweist, die mit einem abnehmbaren oder nicht abnehmbaren Schutzplättchen abgedeckt werden kann, wobei die Entlüftungsöffnung vorzugsweise in der Nähe der Plattform (16) angeordnet ist.

5. Dämmelement nach einem der vorausgehenden Ansprüche, **dadurch gekennzeichnet, dass** es dazu bestimmt ist, über seine offene Konkavität (10A) eine Rohrleitung (2) zu abzudecken.

6. Dämmelement nach Anspruch 5, **dadurch gekennzeichnet, dass** es in Verbindung mit einer gegenüberliegenden, komplementären Abdeckung (3) dazu bestimmt ist, eine isolierende, die Rohrleitung (2) einschließende Schutzhülle (4) zu bilden.

7. Dämmelement nach einem der vorausgehenden Ansprüche, **dadurch gekennzeichnet, dass** es für die Befestigung von technischen Elementen (7) verwendet wird, die dem Verlauf der Rohrleitungen folgen, an denen das Element angebracht ist.

8. Dämmelement nach Anspruch 4, **dadurch gekennzeichnet, dass** es mittels der oder den Plattform(en) (16) eine sensorische Leitung (7) mit mindestens einem Sensor (70) führt, der gegenüber dem Entlüftungsloch (8) angebracht ist.

9. Dämmelement nach einem der vorausgehenden Ansprüche, **dadurch gekennzeichnet, dass** es an einer in einem Gebäude, oder in einem Fortbewegungsmittel der Luftfahrt, des Schienenverkehrs, des Wasser- oder Straßenverkehrs verlaufenden Rohrleitung aufgesteckt ist.

## Claims

1. Protection element (1) for the thermal insulation (5) of pipes, comprising a hollow body (10) with an open concavity (1 OA) and a wall (11), **characterised in that** at least one rigid platform (16) is integrated in the thickness of the wall (11), which platform constitutes a boss in relation to the outer side (11 A) of the wall and constitutes a positioning means and/or support means intended for receiving the fastening of technical equipment to be associated with said protection element, and **in that** the platform (16) comprises at least one insert (9) embedded in the wall (11) of said element body.

2. Protection element according to claim 1, **characterised in that** the platform (16) comprises at least one orifice (17) constituting a fastening means.

3. Protection element according to any of the preceding claims, **characterised in that** the wall (11) of the body is made up of one or more thermally insulating materials capable of being moulded, such as plastic-based material of the epoxy resin type, and/or thermal insulation fibres of the fibreglass type.

4. Protection element according to any of the preceding claims, **characterised in that** the wall (11) of the body has at least one exhaust port (8) that can be covered by a removable or non-removable protection pad, wherein the exhaust port is preferably placed close to the platform (16).

5. Protection element according to any of the preceding claims, **characterised in that** it is intended to cover a pipe (2) with its open concavity (10A)

6. Protection element according to claim 5, **characterised in that** it is intended to be associated in a face-to-face arrangement with a supplementary cover (3) to form an insulating protection shell (4) enclosing said pipe (2).

7. Protection element according to any of the preceding claims, **characterised in that** it is used for fastening technical elements (7) intended to follow the path of the piping against which said element is added.

8. Protection element according to claim 4, **characterised in that** it supports, with the help of the platform or platforms (16), a sensory line (7) fitted with at least one sensor (70) arranged opposite the exhaust port (8).

9. Protection element according to any of the preceding claims, **characterised in that** it is added against piping arranged in a building or in equipment for air, rail, water or road type locomotion.
